# EUROPÄISCHE PATENTANMELDUNG

(11) **EP 1 882 406 A1**
(43) Veröffentlichungstag der Anmeldung: **30.01.2008**
(21) Anmeldenummer: 07014295.5
(22) Anmeldetag: 20.07.2007
(51) Int. Cl.: A01D 43/063, E01H 1/04

(54) **Fahrbare Sammelmaschine**

(30) Priorität: 29.07.2006 DE 102006035144
(71) Anmelder: Amazonen-Werke H. Dreyer GmbH & Co. KG, 49205 Hasbergen (DE)
(72) Erfinder: Fischer, Sebastian, 57910 Hambach (FR)

(57) **Zusammenfassung**

Fahrbare Sammelmaschine, wie Mäh-, Vertikutier- und/oder Kehrgerät, mit einem ein Gehäuse aufweisenden Rahmen, eine Aufnahmevorrichtung, die das aufzusammelnde Gut aufnimmt und einem sich an das Gehäuse anschließenden Sammelbehälter zuführt, wobei der Sammelbehälter eine Entleerungsöffnung aufweist und zum Entleeren so verschwenkbar ist, dass die Entleerungsöffnung zumindest teilweise nach unten weist. Um ein einfaches Entleeren des sich im Sammelbehälter befindlichen Gutes in einen Aufnahmebehältnis zu ermöglichen, ist vorgesehen, dass an dem Sammelbehälter Aufnahmevorrichtungen zur Anordnung eines Aufnahmebehältnisses, in welches das im Sammelbehälter gesammelte Gut zum Entleeren des Sammelbehälters umfüllbar ist, angeordnet sind, dass die Aufnahmevorrichtung als das Aufnahmebehältnis bei einer definierten Belastung freigebende Mittel ausgebildet sind.

## Beschreibung

Die Erfindung betrifft eine fahrbare Sammelmaschine gemäß des Oberbegriffes des Patentanspruches 1.

Eine derartige Sammelmaschine ist beispielsweise durch die DE 42 32 541 C2 bekannt. Der Sammelbehälter wird zum Entleeren um eine horizontale Achse verschwenkt, so dass das in dem Sammelbehälter gesammelte Gut aus der Entleerungsöffnung herausfallen kann. Das Gut aus dem Sammelbehälter wird entweder auf freien Flächen in Haufen gesammelt oder auf Transportfahrzeugen entleert. In den Fällen, in denen kein Transportfahrzeug zur Aufnahme des gesammelten Gutes aus dem Sammelbehälter zur Verfügung steht und das Gut nicht auf dem Boden abgekippt werden soll, wäre es wünschenswert, dass aufgesammelte Gut aus dem Sammelbehälter in transportable Aufnahmebehälter umfüllen zu können, welche anschließend in einem separaten Arbeitsvorgang eingesammelt werden können.

Der Erfindung liegt die Aufgabe zugrunde, ein einfaches Entleeren des sich im Sammelbehälter befindlichen Gutes in ein Aufnahmebehältnis zu ermöglichen.

Diese Aufgabe wird erfindungsgemäß durch die Merkmale des Kennzeichens des Patentanspruches 1 gelöst. Infolge dieser Maßnahmen ist es möglich, vor der Entleerungsöffnung des Sammelbehälters mittels der Aufnahmevorrichtung ein Aufnahmebehältnis anzuordnen, in welchem das sich im Sammelbehälter befindliche Gut geschüttet werden kann. Mittels der Aufnahmevorrichtung, an dem das Aufnahmebehältnis befestigt ist, wird das Aufnahmebehältnis in der richtigen Position zum Sammelbehälter gehalten, so dass das Gut aus dem Sammelbehälter überladen werden kann. Hierbei sind die Aufnahmevorrichtungen so ausgebildet, dass eine Überlastung des Sammelbehälters bzw. von Einrichtungen der Sammelmaschine, wie die Achslast etc. nicht eintreten kann. Denn bei einer definierten Belastung geben die Aufnahmevorrichtungen das Aufnahmebehältnis frei, so dass das Aufnahmebehältnis vom Sammelbehälter getrennt wird.

Beim Umfüllen des Gutes aus dem Sammelbehälter in das Aufnahmebehältnis steht das Aufnahmebehältnis auf dem Boden und durch die Aufnahmevorrichtungen wird, wenn das Aufnahmebehältnis beispielsweise aus einem Sack besteht, in der richtigen Form und Position gehalten werden.

Damit die Aufnahmevorrichtung bei einer definierten Belastung des Aufnahmebehältnisses in einfacher Form freigeben können ist vorgesehen, dass die Mittel als federnd belastete Klemmelemente ausgebildet sind. Hierbei können die Klemmelemente federnd belastete Klemmbügel sein.

Auch ist es möglich, die Mittel als elastisch umbiegbare Hakenelemente auszubilden. Hier kann dann das Aufnahmebehältnis aus den Hakenelementen heraus rutschen.

Bei einem Sammelbehälter, der ein seine Entleerungsöffnung abdeckendes und zum Entleeren aufschwenkbares Abdeckelement aufweist, ist zur vorteilhaften Befestigung und richtigen Positionierung des Aufnahmebehälters vorgesehen, dass die Mittel an dem Abdeckelement in dem der Aufschwenkseite des Abdeckelementes benachbarten Bereich und an dem Sammelbehälter an dem der Aufschwenkseite des Abdeckelementes benachbarten Bereich angeordnet sind.

Das Sammelbehältnis lässt sich in einfacher Weise an dem Sammelbehälter und an dem Abdeckelement dadurch befestigen, dass an dem Sammelbehälter und an dem Abdeckelement jeweils zwei Mittel angeordnet sind.

Eine einfache Ausgestaltung des Aufnahmebehältnisses kann als Auffangsack oder als sog. Big bag vorgesehen sein.

Eine einfache Befestigung des Aufnahmebehältnisses an dem Sammelbehälter und/oder dem Abdeckelement lässt sich dadurch erreichen, dass das Aufnahmebehältnis Trageschlaufen aufweist, dass die Trageschlaufen von den Aufnahmevorrichtungen aufgenommen werden.

Um in einfacher Weise das Sammelbehältnis in der richtigen Form in Position zu dem Sammelbehälter zu halten bzw. Sammelbehälter vom Aufnahmebehältnis zu trennen, lässt sich dadurch erreichen, dass der Sammelbehälter mittels einer Hebevorrichtung, mittels der der Sammelbehälter anhebbar ist, an dem Rahmen und/oder Gehäuse angeordnet ist.

Somit können durch Anheben des Sammelbehälters die Mittel das Aufnahmebehältnis oder die Trageschlaufen nach zumindest einer Teilumfüllung des Gutes aus dem Sammelbehälter in das Aufnahmebehältnis freigeben.

Zusammenfassend wird der Vorteil erreicht, das der Sammelbehälter der Sammelmaschine in einem als Big bag ähnlichen Sack ausgebildeten Aufnahmebehältnis zu entleeren, und ohne die Maschine zu überlasten und ein automatisches Aushängen des Aufnahmebehältnisses nach Beendigung des Entleerungsvorganges vom Fahrersitz aus zu ermöglichen. Dies lässt sich dadurch realisieren, dass die Schlaufen oder andere Teile des Aufnahmebehältnisses an eine z. B. in ihrer Klemmstärke einstellbare Halterung angeklemmt werden können. Im leeren und somit leichten Zustand wird das Aufnahmebehältnis offen gehalten. Ist das Aufnahmebehältnis gefüllt, was in bodennaher Position erfolgen muss, so dass die Unterseite des Aufnahmebehältnisses auf dem Boden aufsteht, wird die Öffnung des Behältnisses durch die beispielsweise als Klemmmittel ausgebildeten Mittels die Öffnung des Aufnahmebehältnisses offen gehalten. Wird der Sammelbehälter der Sammelmaschine dann angehoben, so sorgt das Gewicht des Sackes mit dem darin befindlichen überladenen Gut für ein selbständiges Lösen des Aufnahmebehältnisses aus den bei einer definierten Lastung freigegebenen Mitteln. Wird der Sammelbehälter in nicht bodennaher Position des Aufnahmebehältnisses überladen, so lösen sich die Schlaufen oder andere Teile des Aufnahmebehältnisses sofort auf den Mitteln, eine Überlastung der Achse Sammelmaschine wird verhindert.

Weitere Einzelheiten der Erfindung sind der Beispielsbeschreibung und den Zeichnungen zu entnehmen. Hierbei zeigen
- Fig. 1: die Sammelmaschine mit an dem Deckel und dem Sammelbehälter eingehängtem Aufnahmebehältniss vor dem Entleerungsvorgang in Seitenansicht.
- Fig. 2: die Sammelmaschine mit in Entleerungsposition geschwenkten Sammelbehälter beim Überladevorgang in Seitenansicht,
- Fig. 3: die Sammelmaschine mit angehobenem Sammelbehälter und gefülltem Aufnahmebehältnisse nach dem Entleerungsvorgang in Seitenansicht,
- Fig. 4: das bei einer definierten Belastung frei gegebende und als Klemmmittel ausgebildete Mittel in Seitenansicht und vergrößertem Maßstab und
- Fig. 5: eine weitere Aufnahmevorrichtung, die als elastisch umbiegbares Halteelement ausgebildet ist, in Seitenansicht.

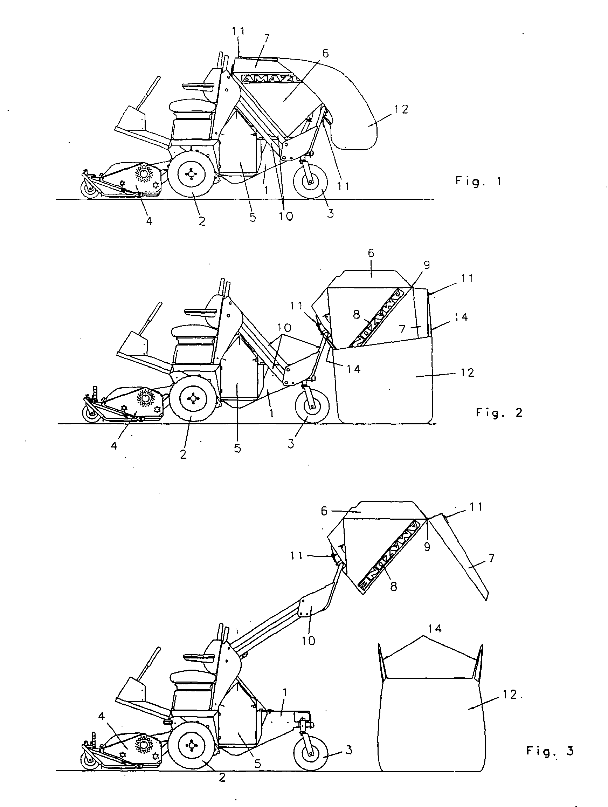

Die Sammelmaschine ist als selbstfahrendes Mäh-, Vertikutierund Kehrgerät ausgebildet. Sie weist den Rahmen 1 auf, der sich über die Antriebesräder 2 und die Laufräder 3 auf dem Boden abstützt. Im vorderen Bereich ist die Aufnahmevorrichtung 4 an dem das Gehäuse 5 aufweisenden Rahmen 1 angeordnet. Die Aufnahmevorrichtung 4 nimmt das aufzusammelnde Gut auf und fördert es über eine nicht dargestellte Transportvorrichtung in den sich an dem Gehäuse 5 anschließende Sammelbehälter 6. Der Sammelbehälter 6 weist auf seiner Oberseite die mit dem als Deckel ausgebildeten Abdeckelement 7 abgedeckte Entleerungsöffnung 8 auf. Der Deckel 7 ist mittels der Gelenken 9, die eine quer zur Fahrtrichtung verlaufende Schwenkachse aufweisen, an dem Sammelbehälter 6 im vorderen oberen Bereich aufschwenkbar angelenkt. Der Sammelbehälter 6 ist mittels einer Schwenkund Hebevorrichtung 10 am Rahmen 1 der Sammelmaschine befestigt. Zum Entleeren des Sammelbehälters 6 kann dieser aus den in Fig. 1 dargestellten Position in die in Fig. 2 dargestellte Entleerungsstellung mittels im Einzelnen nicht dargestellte motorischer Betätigungselemente verschwenkt werden.

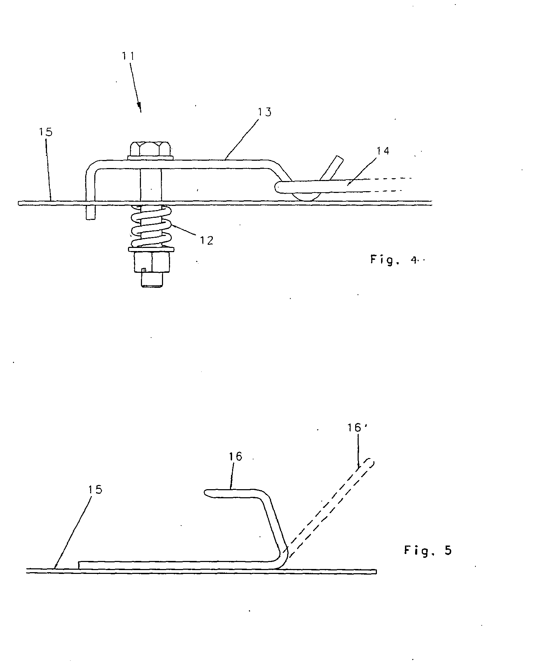

Um das sich in dem Sammelbehälter 6 befindliche aufgesammelte Gut in ein beispielsweise als Big bag ausgebildetes Aufnahmebehältnis zu entleeren, sind an dem Sammelbehälter 6 Aufnahmevorrichtungen 11 angeordnet. Dieser Aufnahmevorrichtung 11 sind als das das Aufnahmebehältnis 12 bei einer definierten Belastung freigebende Mittel ausgebildet. Gemäß der Ausführungsbeispiele nach den Fig. 1 bis 4 sind diese Aufnahmevorrichtungen 11 als federnd belastete Klemmelemente ausgebildet. Diese Klemmelemente 11 sind federnd mittels der Feder 12 belastete Klemmbügel 13, wie Fig. 4 zeigt. Mittels einer Feder 13 werden die Klemmbügel 13 gegen die Wand 14 des Aufnahmebehältnisses 6 bzw. des Deckels 7 gezogen. Zwei Klemmelemente 11 sind am Sammelbehälter 6 und zwei Klemmelemente 11 an dem Deckel 7 befestigt. Im Ausführungsbeispiel weist das als Big bag ausgebildete Aufnahmebehältnis 12 vier Trageschlaufen 15 auf. Jede Trageschlaufe 15 wird hinter den federbelasteten Klemmbügel 13 geschoben, wie Fig. 4 zeigt. Um das sich im Sammelbehälter 6 befindliche aufgesammelte Gut über die Entleerungsöffnung in den Big bag 12 zu entleeren, wird der Sammelbehälter 6 aus der in Fig. 1 dargestellten Position in die in Fig. 2 dargestellte Position verschwenkt. Hierdurch schwenkt der Deckel 7 auf. Gleichzeitig wird die Öffnung des Big bags offen gehalten und der Big bag 12 steht auf dem Boden auf. Das sich im Sammelbehälter befindliche Gut fällt über die Entleerungsöffnung 8 in den Big bag 12. Durch Anheben des Sammelbehälters 6 mittels der Hebevorrichtung 10, die zwischen dem Rahmen 1 und dem Sammelbehälter 6 angeordnet ist, kann der Big bag 12 ganz in geöffneter und gestreckter Lage gebracht werden, so dass das gesamte Gut, welches sich im Sammelbehälter 6 befindet in den Big bag 12 fallen kann. Durch weiteres nach oben bewegen des Sammelbehälters 6 über die Hebevorrichtung 10 lösen sich die Trageschlaufen 14 des Big bag 12 aus den Klemmelementen 11, da sie derart federbelastet eingestellt sind, dass die federnde Klemmwirkung nicht ausreicht, den gefüllten Big bag 12 anzuheben, wie Fig. 3 zeigt. Somit geben die Klemmbügel 13 die Trageschlaufen 14 des Big bags 12 frei. Der Big bag lässt sich also, ohne dass der Fahrer absteigen muss, von dem Sammelbehälter 6 lösen. Anschließend wird der Sammelbehälter 6 durch Verschwenken und nach unten fahren der Hebevorrichtung 10 aus der in Fig. 3 dargestellten Position in Fig. 1 dargestellte Sammelposition 6 gebracht. Wenn der Sammelbehälter wieder gefüllt ist bzw. entleert werden soll, bringt der Fahrer erneut einen als Big bag 12 ausgebildetes Aufnahmebehältnisses an den Klemmbügeln. 13 an, so dass in vorbeschriebener Weise das Entleeren des Sammelbehälters 6 in den Big bag 12 durchgeführt werden kann.

An Stelle die Aufnahmevorrichtung als Klemmelemente 11 oder Klemmbügel 12 auszubilden, können sie auch entsprechend der Fig. 5 als elastisch umbiegbare Hakenelemente 16 ausgebildet sein. Diese Hakenelemente 16 biegen sich dann beim Anheben, wenn der Big bag 12 mit dem sich in dem Sammelbehälter 6 befundenen und in dem Big bag entleerten Gut gefüllt ist um, so dass die Trageschlaufen frei aus den umbiegbären Hakenelementen herausrutschen und so vom Sammelbehälter freikommen können, wir die gestrichelt dargestellte Positione 16' zeigt.

## Patentansprüche

1. Fahrbare Sammelmaschine, wie Mäh-, Vertikutier- und/oder Kehrgerät, mit einem ein Gehäuse aufweisenden Rahmen, eine Aufnahmevorrichtung, die das aufzusammelnde Gut aufnimmt und einem sich an das Gehäuse anschließenden Sammelbehälter zuführt, wobei der Sammelbehälter eine Entleerungsöffnung aufweist und zum Entleeren so verschwenkbar ist, dass die Entleerungsöffnung zumindest teilweise nach unten weist, **dadurch gekennzeichnet, dass** an dem Sammelbehälter (6) Aufnahmevorrichtungen (11,13,16) zur Anordnung eines Aufnahmebehältnisses (12), in welches das im Sammelbehälter (6) gesammelte Gut zum Entleeren des Sammelbehälters (6) umfüllbar ist, angeordnet sind, dass die Aufnahmevorrichtung (11,13,16) als das Aufnahmebehältnis (12) bei einer definierten Belastung freigebende Mittel ausgebildet sind.

2. Sammelmaschine nach Anspruch 1, **dadurch gekennzeichnet, dass** die Mittel (11) als federnd belastete Klemmelemente (13) ausgebildet sind.

3. Sammelmaschine nach einem oder mehreren der vorstehenden Ansprüche, **dadurch gekennzeichnet, dass** die Klemmelemente federnd belastete Klemmbügel (13) sind.

4. Sammelmaschine nach einem öder mehreren der vorstehenden Ansprüche, **dadurch gekennzeichnet, dass** die Mittel als elastisch umbiegbare Hakenelemente (16) ausgebildet sind.

5. Sammelmaschine nach einem oder mehreren der vorstehenden Ansprüche, wobei an dem Sammelbehälter (6) ein die Entleerungsöffnung (8) abdeckendes und zum Entleeren aufschwenkbares Abdeckelement (7) angeordnet ist, **dadurch gekennzeichnet, dass** die Mittel (11,13,16) an dem Abdeckelement (7) in dem der Aufschwenkseite des Abdeckelementes (7) benachbarten Bereich und an dem Sammelbehälter (6) an dem der Aufschwenkseite des Abdeckelementes (7) benachbarten Bereich angeordnet sind.

6. Sammelmaschine nach einem oder mehreren der vorstehenden Ansprüche, **dadurch gekennzeichnet, dass** an dem Sammelbehälter (6) und an dem Abdeckelement (7) jeweils zwei Mittel (11,13,16) angeordnet sind.

7. Sammelmaschine nach einem oder mehreren der vorstehenden Ansprüche, **dadurch gekennzeichnet, dass** das Aufnahmebehältnis (12) als Auffangsack ausgebildet ist.

8. Sammelmaschine nach einem oder mehreren der vorstehenden Ansprüche, **dadurch gekennzeichnet, dass** das Aufnahmebehältnis (12) als sog. Big bag ausgebildet ist.

9. Sammelmaschine nach einem oder mehreren der vorstehenden Ansprüche, **dadurch gekennzeichnet, dass** das Aufnahmebehältnis (12) Trageschlaufen (14) aufweist, dass die Trageschlaufen (14) von den Aufnahmevorrichtung (11,13,16) aufgenommen werden.

10. Sammelmaschine nach einem oder mehreren der vorstehenden Ansprüche, **dadurch gekennzeichnet, dass** der Sammelbehälter (6) mittels einer Hebevorrichtung (10), mittels der der Sammelbehälter anhebbar ist, an dem Rahmen (1) und/oder Gehäuse (5) angeordnet ist.

11. Sammelmaschine nach einem oder mehreren der vorstehenden Ansprüche, **dadurch gekennzeichnet, dass** durch Anheben des Sammelbehälters (6) die Mittel (11,13,16) das Aufnahmebehältnis (12) und/oder die Trageschlaufen (14) nach zumindest einer Teilumfüllung des Gutes aus dem Sammelbehälter (6) in das Aufnahmebehältnis (12) freigeben.
